# EUROPEAN PATENT APPLICATION

(11) **EP 4 596 984 A1**
(43) Date of publication of application: **06.08.2025**
(21) Application number: 23871649.2
(22) Date of filing: 29.08.2023
(51) Int. Cl.: F24F 7/003, B01D 53/22, F24F 3/16, F24F 8/10

(54) **CO2 SEPARATION SYSTEM**

(30) Priority: 27.09.2022 JP 2022153187
(71) Applicant: Panasonic Intellectual Property Management Co., Ltd., Kadoma-shi, Osaka 571-0057 (JP)
(72) Inventor: ICHIHARA, Tsutomu, Kadoma-shi, Osaka 571-0057 (JP); TSUBAKI, Kenji, Kadoma-shi, Osaka 571-0057 (JP)
(74) Representative: Grünecker Patent- und Rechtsanwälte PartG mbB
(86) International application number: PCT/JP2023/031171
(87) International publication number: WO 2024/070408

(57) **Abstract**

Inside air introduction duct (52) and inside air blow duct (54) introduce and circulate air in a target space inside a room as inside air and return the inside air to the target space. Outside air introduction duct (56) and outside air blow duct (58) introduce and circulate air outside the room as outside air and release the outside air to the outside of the room. CO₂ separation element (20) separates CO₂ from inside air circulating through inside air introduction duct (52), and introduces CO₂ into the outside air circulating through outside air introduction duct (56). First temperature adjuster (4a) and second temperature adjuster (4b) adjust at least one of the temperature of inside air and the temperature of outside air, each of which is introduced into CO₂ separation element (20). Controller (5) performs control so that the temperature difference between the temperature of the inside air and the temperature of the outside air, each of which is introduced into CO₂ separation element (20), becomes smaller than the temperature difference between the temperature of the air in the target space and the temperature of the air outside the room.

## Description

### TECHNICAL FIELD

The present disclosure relates to a CO₂ separation system that separates CO₂ from air in a target space.

### BACKGROUND ART

To reduce the concentration of carbon dioxide (CO₂) in air of a closed spatial unit, the air of the spatial unit is fed to a purge gas membrane system. In the purge gas membrane system, CO₂ preferentially permeates the membrane module, so that air with reduced CO₂ remains. The remaining air is returned to the spatial unit again (See, for example, PTL 1).

### Citation List

### Patent Literature

PTL 1: Japanese Translation of PCT International Application Publication No. 2006-512946

### SUMMARY OF THE INVENTION

In a CO₂ separation system, CO₂ is separated from inside air in a space, and the separated CO₂ is mixed with a purge gas and emitted. When outside air from the outside of the space is used as the purge gas, heat exchange occurs between inside air and outside air, and heat loss due to the heat exchange becomes a problem.

The present disclosure has been made to solve the above problem, and provides a technique for reducing heat loss due to heat exchange even when inside air and outside air are used to separate CO₂.

In an aspect of the present disclosure, the CO₂ separation system includes: an inside air duct that introduces and circulates air in a target space inside a room as inside air and returns the inside air to the target space; an outside air duct that introduces and circulates air outside the room as outside air and releases the outside air to the outside of the room; a CO₂ separator that separates CO₂ from the inside air circulating through the inside air duct and introduces the CO₂ into the outside air circulating through the outside air duct; a temperature adjuster that adjusts at least one of a temperature of the inside air to be introduced into the CO₂ separator and a temperature of the outside air to be introduced into the CO₂ separator; and a controller that controls the temperature adjuster. The controller controls the temperature adjuster so that a temperature difference between the temperature of the inside air to be introduced into the CO₂ separator and the temperature of the outside air to be introduced into the CO₂ separator becomes smaller than a temperature difference between a temperature of the air in the target space and a temperature of the air outside the room.

Any combinations of the above-described components and modifications of the expressions of the present disclosure among methods, devices, systems, recording media, and computer programs are also effective as aspects of the present disclosure.

According to the present disclosure, it is possible to reduce heat loss due to heat exchange even when inside air and outside air are used to separate CO₂.

### BRIEF DESCRIPTION OF THE DRAWINGS

Fig. 1 is a schematic diagram illustrating an installation example of a CO₂ separation system according to a first exemplary embodiment.
Fig. 2A is a diagram illustrating an outline of a CO₂ separation element in Fig. 1.
Fig. 2B is a diagram illustrating the outline of the CO₂ separation element in Fig. 1.
Fig. 3 is a diagram illustrating a configuration of the CO₂ separation element in Fig. 1.
Fig. 4 is a chart showing a data structure of a table held in a controller in Fig. 1.
Fig. 5 is a diagram illustrating a configuration of a CO₂ separation system according to a second exemplary embodiment.

### DESCRIPTION OF EMBODIMENT

### (Exemplary embodiments)

Hereinafter, exemplary embodiments of the present disclosure will be described with reference to the drawings. Note that, the following exemplary embodiments are examples embodying the present disclosure, and do not limit the technical scope of the present disclosure. In addition, the drawings explained in the exemplary embodiments are schematic representations, and the ratios of the sizes and the thicknesses of the components in each of the drawings do not necessarily reflect the actual dimensional ratio.

### (First exemplary embodiment)

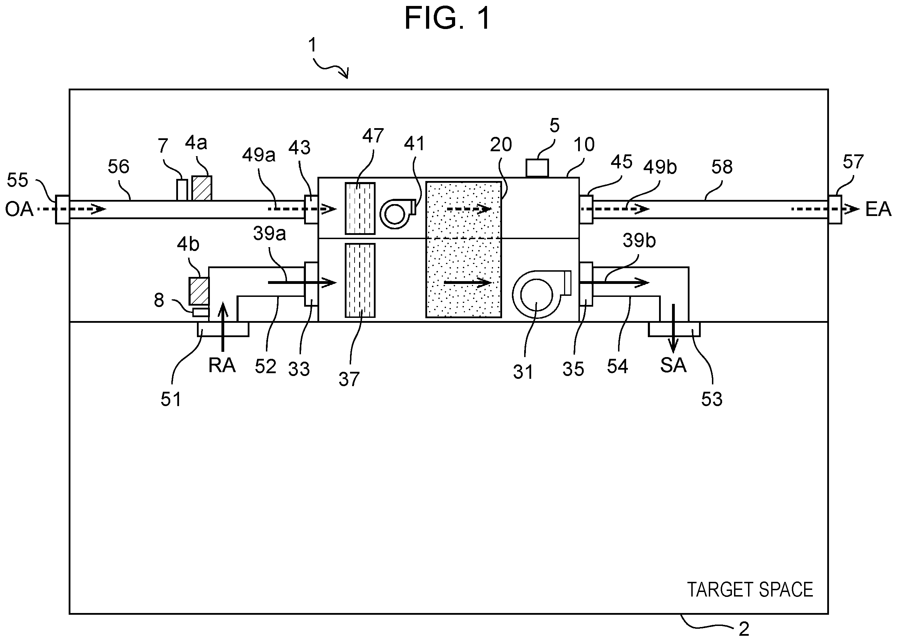

A first exemplary embodiment of the present disclosure will be described with reference to the accompanying drawings. Fig. 1 is a schematic diagram illustrating an installation example of CO₂ separation system 1. CO₂ separation system 1 is installed inside a room in building 2 such as a house. CO₂ separation system 1 is an apparatus that removes a target gas (for example, CO₂ or the like) from air in a target space inside a room. CO₂ separation system 1 includes housing 10, CO₂ separation element 20, inside air fan 31, inside air filter 37, outside air fan 41, outside air filter 47, first temperature adjuster 4a and second temperature adjuster 4b collectively referred to as temperature adjuster 4, controller 5, outside air temperature detector 7, and inside air temperature detector 8.

Housing 10 is the outer frame of CO₂ separation system 1. On the outer periphery of housing 10, inside air port 33, air supply port 35, outside air port 43, and exhaust port 45 are arranged. Inside air port 33 is a suction port that suctions air 39a into CO₂ separation system 1. Inside air port 33 is communicated and connected to indoor suction port 51 provided in building 2 through inside air introduction duct 52. Indoor suction port 51 is an opening provided in a target space of building 2, and is an opening that introduces air 39a (inside air) in the target space into CO₂ separation system 1 as RA. Inside air introduction duct 52 is a duct to introduce inside air into housing 10. One end of inside air introduction duct 52 is connected to indoor suction port 51, and RA from the inside of the room flows into inside air introduction duct 52. The other end of inside air introduction duct 52 is connected to inside air port 33, and allows RA to circulate into housing 10. That is, through inside air introduction duct 52, air in the target space inside the room is introduced and circulated as inside air.

Air supply port 35 is a blow port that blows air 39b from CO₂ separation system 1. Air supply port 35 is communicated and connected to indoor blow port 53 provided in building 2 through inside air blow duct 54. Indoor blow port 53 is an opening provided in building 2, and is an opening to supply air 39b whose CO₂ concentration has been reduced by CO₂ separation element 20 to the target space as SA. Inside air blow duct 54 is a duct that supplies inside air from housing 10 to the target space. One end of inside air blow duct 54 is connected to air supply port 35, and air 39b whose CO₂ concentration has been reduced by CO₂ separation element 20 flows into the duct. The other end of inside air blow duct 54 is connected to indoor blow port 53, and supplies air 39b in the duct to the target space as SA. That is, inside air blow duct 54 causes air 39b to be returned to the target space.

Outside air port 43 is a suction port that suctions air 49a into CO₂ separation system 1. Outside air port 43 is communicated and connected to outdoor suction port 55 provided in building 2 through outside air introduction duct 56. Outdoor suction port 55 is an opening provided in building 2, and is an opening that introduces air 49a (outside air) outside the room into CO₂ separation system 1 as OA. Outside air introduction duct 56 is a duct to introduce outside air into housing 10. One end of outside air introduction duct 56 is connected to outdoor suction port 55, and OA from the outside of the room flows into outside air introduction duct 56. The other end of outside air introduction duct 56 is connected to outside air port 43, and allows OA to circulate into housing 10. That is, through outside air introduction duct 56, air from the outside of the room is introduced and circulated as outside air.

Exhaust port 45 is a blow port that blows air 49b from CO₂ separation system 1 to the outside of the room. Exhaust port 45 is communicated and connected to outdoor blow port 57 provided in building 2 through outside air blow duct 58. Outdoor blow port 57 is an opening provided in building 2, and is an opening to exhaust air 49b whose CO₂ concentration has been increased by CO₂ separation element 20 to the outside of the room as EA. Outside air blow duct 58 is a duct that supplies outside air from housing 10 to the outside of the room. One end of outside air blow duct 58 is connected to exhaust port 45, and air 49b whose CO₂ concentration has been increased by CO₂ separation element 20 flows into the duct. The other end of outside air blow duct 58 is connected to outdoor blow port 57, and exhausts air 49b in the duct to the outside of the room as EA. That is, outside air blow duct 58 causes air 49b to be released to the outside of the room.

Hereinafter, air 39a and air 39b may be collectively referred to as "inside air", and air 49a and air 49b may be collectively referred to as "outside air". Inside air introduction duct 52 and inside air blow duct 54 may be combined as "inside air duct", and outside air introduction duct 56 and outside air blow duct 58 may be combined as "outside air duct".

Here, the diameter of each duct will be described. In the exemplary embodiment, the duct diameter of each of outside air introduction duct 56 and outside air blow duct 58, through which outside air is circulated, is smaller than the duct diameter of each of inside air introduction duct 52 and inside air blow duct 54, through which inside air is circulated. This is because the flow rate of outside air circulating in CO₂ separation system 1 becomes smaller than the flow rate of inside air. As a result, pressure loss on the outside air side can be suppressed. In addition, heat exchange generally occurs due to the temperature difference between outside air and inside air. However, due to the suppressed flow rate of outside air, heat loss resulting from heat exchange can be suppressed.

Within housing 10, CO₂ separation element 20, inside air fan 31 (circulation fan), inside air filter 37, outside air fan 41, and outside air filter 47 are attached. CO₂ separation element 20 separates CO₂ from inside air having circulated through inside air introduction duct 52, and introduces the CO₂ into outside air having circulated through outside air introduction duct 56. This can be also said that a member that selectively transmits CO₂ from inside air to outside air. Details of CO₂ separation element 20 will be described later.

Inside air fan 31 is an air blower that suctions inside air from the target space through inside air port 33, and blows the inside air to the target space through air supply port 35. By driving inside air fan 31, the inside air suctioned from the target space through inside air port 33 passes through inside air filter 37, CO₂ separation element 20, and inside air fan 31, and is emitted to the target space through air supply port 9. The air volume delivered by inside air fan 31 is preferably larger than the air volume delivered by outside air fan 41. Inside air filter 37 is a filter that removes dust and dirt from inside air having flowed into housing 10 and supplies the cleaned air to CO₂ separation element 20. Examples thereof include a high efficiency particulate air (HEPA) filter.

Outside air fan 41 is an air blower that suctions outside air from the outside of the room through outside air port 43, and emits the outside air to the outside of the room through exhaust port 45. By driving outside air fan 41, outside air suctioned from the outside of the room through outside air port 43 passes through outside air filter 47, CO₂ separation element 20, and outside air fan 41, and is emitted to the outside of the room through exhaust port 45. The air volume delivered by outside air fan 41 is preferably smaller than the air volume delivered by inside air fan 31. Outside air fan 41 is provided, for example, at the downstream side of outside air filter 47 and at the upstream side of CO₂ separation element 20. With such an arrangement, outside air can be heated by heat generated by the operation of outside air fan 41, and heat loss due to heat exchange between outside air and inside air is reduced when outside air has a lower temperature than inside air. Outside air fan 41 may be provided at the downstream side of CO₂ separation element 20. Outside air filter 47 is a filter that removes dust and dirt from outside air having flowed into housing 10 and supplies the cleaned air to CO₂ separation element 20. Examples thereof include a HEPA filter.

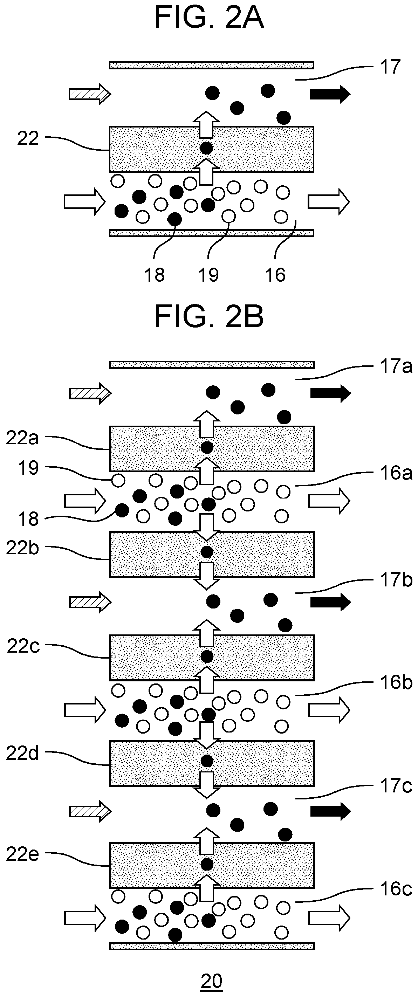

Here, the outline of separation of CO₂ by CO₂ separation element 20 will be described. Figs. 2A and 2B illustrate the outline of CO₂ separation element 20. Fig. 2A is a cross-sectional view illustrating a simplified configuration of CO₂ separation element 20. Inside air duct 16 through which inside air circulates from the left side toward the right side and outside air duct 17 through which outside air circulates from the left side toward the right side are arranged and overlapped with each other in the vertical direction. CO₂ separation membrane 22 is arranged between inside air duct 16 and outside air duct 17. In inside air introduced into inside air duct 16, CO₂ 18 and N₂ 19 are mixed. Although O₂ and the like are also mixed in the actual air, O₂ and the like are omitted here for clarifying description. When inside air circulates through inside air duct 16 along CO₂ separation membrane 22, CO₂ separation membrane 22 selectively transmits CO₂ 18 in inside air, and emits CO₂ 18 to outside air in outside air duct 17. As a result, the concentration of CO₂ 18 in inside air decreases and the concentration of CO₂ 18 in outside air increases.

Fig. 2B illustrates the configuration of CO₂ separation element 20 for more efficiently separating CO₂ 18 than Fig. 2A. CO₂ separation element 20 includes first inside air duct 16a to third inside air duct 16c collectively referred to as inside air duct 16, first outside air duct 17a to third inside air duct 16c collectively referred to as outside air duct 17, and first CO₂ separation membrane 22a to fifth CO₂ separation membrane 22e collectively referred to as CO₂ separation membrane 22. The number of each of inside air duct 16 and outside air duct 17 are not limited to "3". From the upper side to the lower side, first outside air duct 17a, first inside air duct 16a, second outside air duct 17b, second inside air duct 16b, third outside air duct 17c, and third inside air duct 16c are arranged in this order. Between first outside air duct 17a and first inside air duct 16a, first CO₂ separation membrane 22a is arranged. Between first inside air duct 16a and second outside air duct 17b, second CO₂ separation membrane 22b is arranged. Between second outside air duct 17b and second inside air duct 16b, third CO₂ separation membrane 22c is arranged. Between second inside air duct 16b and third outside air duct 17c, fourth CO₂ separation membrane 22d is arranged. Between third outside air duct 17c and third inside air duct 16c, fifth CO₂ separation membrane 22e is arranged. As in Fig. 2A, CO₂ 18 in inside air circulating through inside air duct 16 is selectively transmitted through CO₂ separation membrane 22 to be arranged in outside air in outside air duct 17.

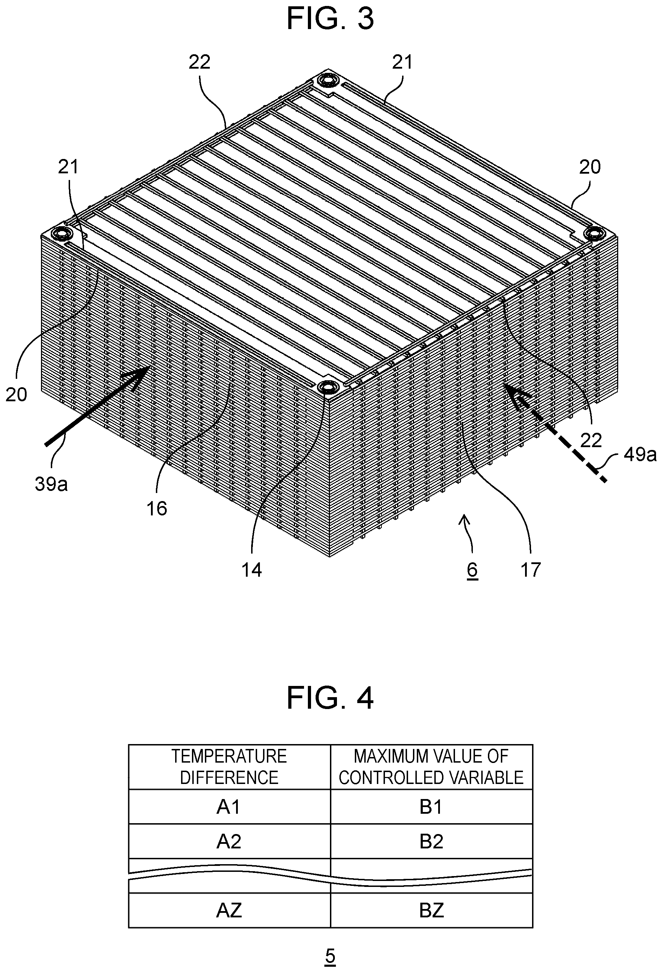

Fig. 3 illustrates the configuration of CO₂ separation element 20. This is a perspective view illustrating stacked structure 6 used as CO₂ separation element 20 mounted on CO₂ separation system 1. Hereinafter, description will be made assuming that the stacking direction of stacked structure 6 is the vertical direction, which does not necessarily indicate the direction in the state where stacked structure 6 is mounted on CO₂ separation system 1. In stacked structure 6, rectangular frames 14 and rectangular CO₂ separation element pieces 21 are alternately stacked in the vertical direction, and inside air ducts 16 and outside air ducts 17 intersecting inside air duct 16 are alternately configured one layer at a time. More specifically, stacked structure 6 is configured as follows: CO₂ separation element pieces 21 are fitted from both, upper and lower, surfaces thereof at the end of frame 14, and CO₂ separation element pieces 21 and frames 14 are repeatedly stacked. When CO₂ separation element pieces 21 are fitted from both, upper and lower, surfaces thereof at frame 14, frames 14 are orthogonally stacked so that each stage alternates to each other. With such a configuration, as shown in Fig. 2B, inside air duct 16 circulating inside air and outside air duct 17 circulating outside air are alternately formed, inside air and outside air alternately and orthogonally flow through each of the air ducts, and inside air and outside air alternately and orthogonally flow in the stacking direction of CO₂ separation element pieces 21, so that CO₂ separation element 20 can selectively transmit CO₂ from the inside air side to the outside air side.

CO₂ separation element piece 21 is a sheet-like member to transmit CO₂ from inside air to outside air when inside air and outside air flow with CO₂ separation element piece 21 interposed therebetween. In the exemplary embodiment, CO₂ separation element piece 21 is fitted and bent by frame 14. Therefore, it is preferable to use a member having stretchability and strength that can withstand the bending. Inside air duct 16 is an air duct through which inside air flow circulates. More specifically, inside air duct 16 is an air duct portion formed in stacked structure 6 within the air duct through which air emitted to the outside of the room from the target space flows. Outside air duct 17 is an air duct through which outside air circulates. More specifically, outside air duct 17 is an air duct portion formed in stacked structure 6 within the air duct through which air supplied from the outside of the room to the target space flows. Now Fig. 1 will be referred to again.

First temperature adjuster 4a is a device that adjusts the temperature of outside air by heating or cooling outside air flowing into CO₂ separation element 20. First temperature adjuster 4a is also referred to as outside air temperature adjuster. First temperature adjuster 4a is, for example, a heater/Peltier element attached to outside air introduction duct 56. First temperature adjuster 4a may be outside air fan 41 provided between CO₂ separation element 20 and the outside air duct. In this case, since outside air is heated using exhaust heat from outside air fan 41, exhaust heat from outside air fan 41 is effectively utilized. Second temperature adjuster 4b is a device that adjusts the temperature of inside air by heating or cooling inside air flowing into CO₂ separation element 20. Second temperature adjuster 4b is also referred to as inside air temperature adjuster. Second temperature adjuster 4b is, for example, a heater/Peltier element attached to inside air introduction duct 52.

Outside air temperature detector 7 is attached to outside air introduction duct 56, and detects the temperature of outside air circulating through outside air introduction duct 56. Any publicly known technique may be used to detect the temperature, and thus, the description thereof will be omitted here. Information on the outside air temperature detected by outside air temperature detector 7 is transmitted to controller 5. Inside air temperature detector 8 detects the temperature of inside air circulating through inside air introduction duct 52. Information on the inside air temperature detected by inside air temperature detector 8 is transmitted to controller 5.

Controller 5 receives the outside air temperature detected by outside air temperature detector 7 and the inside air temperature detected by inside air temperature detector 8. Controller 5 controls temperature adjuster 4 based on the temperature of outside air and the temperature of inside air. Specifically, controller 5 controls first temperature adjuster 4a so that the temperature difference between the temperature of the inside air to be introduced into CO₂ separation element 20 and the temperature of the outside air to be introduced into CO₂ separation element 20 is smaller than the temperature difference between the temperature of the air in the target space and the temperature of the air outside the room. As a result, heat loss due to heat exchange in CO₂ separation element 20 is reduced. For example, when outside air is 5°C and inside air is 25°C and temperature control is not performed, air supplied to the target space by inside air fan 31 is reduced to about 15°C by heat exchange, so that extra air-conditioning energy is required to keep inside air at 25°C. On the other hand, when outside air is controlled to 25°C by temperature control, there is no heat exchange, and the extra air-conditioning energy is 0. Furthermore, when the temperature control is performed using exhaust heat from outside air fan 41, energy required for temperature control is also 0.

The apparatus, the system, or a subject of the method in the present disclosure is provided with a computer. Execution of a program by this computer realizes the functions of the apparatus, the systems, or the subject of the method in the present disclosure. The computer includes, as a main hardware configuration, a processor that operates according to the program. The type of the processor is not limited as long as the processor can realize the functions by executing the program. The processor includes one or a plurality of electronic circuits including a semiconductor integrated circuit (IC) or a large scale integration (LSI). The plurality of electronic circuits may be integrated on one chip or may be provided on a plurality of chips. The plurality of chips may be aggregated into one device or may be provided in a plurality of devices. The program is recorded in a computer-readable non-transitory recording medium such as a read-only memory (ROM), an optical disk, or a hard disk drive. The program may be stored in advance in a recording medium, or may be supplied to the recording medium via a wide area communication network including the Internet.

Next, the operation of CO₂ separation system 1 will be described. When CO₂ separation system 1 is started, inside air fan 31 and outside air fan 41 start to operate. With inside air fan 31, air 39a from indoor suction port 51 flows as RA from inside air port 33 into housing 10 through inside air introduction duct 52. Flowing air 39a circulates through inside air filter 37 so that dust and dirt are removed, and becomes cleaned air. Thereafter, air 39a flows into CO₂ separation element 20.

On the other hand, with outside air fan 41, air 49a from outdoor suction port 55 flows as OA from outside air port 43 into housing 10 through outside air introduction duct 56. Flowing air 49b circulates through outside air filter 47 so that dust and dirt are removed, and becomes cleaned air. Thereafter, air 49a flows into CO₂ separation element 20.

Air 39a flowing into CO₂ separation element 20 circulates through inside air duct 16, and air 49a circulates through outside air duct 17. At that time, through CO₂ separation membrane 22 that selectively transmits CO₂, CO₂ transfers from air 39a having a high CO₂ concentration to air 49a having a relatively low CO₂ concentration. As a result, the CO₂ concentration of air 39a decreases to become air 39b. In addition, the CO₂ concentration of air 49a increases to become air 49b.

Inside air (air 39b) having a reduced CO₂ concentration reaches indoor blow port 53 from air supply port 35 through inside air blow duct 54, and is supplied to the target space as SA. On the other hand, outside air (air 49b) having an increased CO₂ concentration reaches outdoor blow port 57 from exhaust port 45 through outside air blow duct 58, and is emitted to the outside of the room as EA. In this way, in CO₂ separation system 1, CO₂ is released from inside air to outside air, and an increase in CO₂ concentration is suppressed in the target space.

In order that temperature adjustment energy required to operate at least one of first temperature adjuster 4a and second temperature adjuster 4b becomes smaller than heat exchange energy caused by heat exchange between inside air and outside air in CO₂ separation membrane 22, limitation may be defined when controller 5 controls at least one of the temperature of outside air and the temperature of inside air. Fig. 4 shows the data structure of a table held in controller 5. Fig. 4 shows the correspondence between the temperature difference and the maximum value of the controlled variable. The temperature difference indicates the difference between the outside air temperature detected by outside air temperature detector 7 and the inside air temperature detected by inside air temperature detector 8. The maximum value of the controlled variable indicates the maximum value when at least one of first temperature adjuster 4a and second temperature adjuster 4b is controlled. Controller 5 derives the temperature difference between the outside air temperature and the inside air temperature, and then refers to the table of Fig. 4 to acquire the maximum value of the controlled variable corresponding to the derived temperature difference. Controller 5 controls at least one of first temperature adjuster 4a and second temperature adjuster 4b with a value smaller than the maximum value of the controlled variable.

According to the first exemplary embodiment, control is performed so that the temperature difference between the temperature of inside air and the temperature of outside air, each of which is introduced into CO₂ separation element 20, becomes smaller than the temperature difference between the temperature of air in the target space and the temperature of air outside the room. Therefore, even when inside air and outside air are used to separate CO₂, heat loss due to heat exchange can be reduced. In addition, temperature adjustment is performed to outside air so that the temperature of outside air gets closer to the temperature of inside air, which facilitates the control. In addition, control is performed so that temperature adjustment energy required to operate temperature adjuster 4 becomes smaller than heat exchange energy caused by heat exchange between inside air and outside air in CO₂ separation element 20, which can reduce energy loss. In addition, temperature adjuster 4 is controlled based on the temperature of inside air detected by inside air temperature detector 8 and the temperature of outside air detected by outside air temperature detector 7, which can improve the accuracy of the control.

The outline of an aspect of the present disclosure is as follows. In an aspect of the present disclosure, CO₂ separation system (1) includes: inside air duct (52, 16, 54) that introduces and circulates air in a target space inside a room as inside air and returns the inside air to the target space; outside air duct (56, 17, 58) that introduces and circulates air outside a room as outside air and releases the outside air to the outside of the room; CO₂ separator (20) that separates CO₂ from the inside air circulating through inside air duct (16) and introduces the CO₂ into the outside air circulating through outside air duct (17); temperature adjuster (4) that adjusts at least one of a temperature of the inside air to be introduced into CO₂ separator (20) and a temperature of the outside air to be introduced into CO₂ separator (20); and controller (5) that controls temperature adjuster (4). Controller (5) controls temperature adjuster (4) so that a temperature difference between the temperature of the inside air to be introduced into CO₂ separator (20) and the temperature of the outside air to be introduced into CO₂ separator (20) becomes smaller than a temperature difference between a temperature of the air in the target space and a temperature of the air outside the room.

Controller (5) may cause temperature adjuster (4) to perform temperature adjustment to the outside air so that the temperature of the outside air gets closer to the temperature of the inside air.

When temperature adjuster (4) is operating, controller (5) may control temperature adjuster (4) so that temperature adjustment energy required to operate temperature adjuster (4) becomes smaller than heat exchange energy caused by heat exchange between the inside air and the outside air in CO₂ separator (20).

Inside air temperature detector (7) that detects a temperature of the inside air in inside air duct (52); and outside air temperature detector (8) that detects the temperature of the outside air in outside air duct (56) may be further included. Controller (5) may control temperature adjuster (4) based on the temperature of the inside air detected by inside air temperature detector (7) and the temperature of the outside air detected by outside air temperature detector (8).

### (Second exemplary embodiment)

Next, a second exemplary embodiment will be described. The second exemplary embodiment relates to CO₂ separation system 1 similar to the first exemplary embodiment. In the second exemplary embodiment, in order to reduce the temperature difference between inside air and outside air before the temperature control, air (hereinafter, referred to as "additional air") in a space other than the target space inside building 2 is mixed with outside air. The following description will be mainly focused on the difference from the first exemplary embodiment.

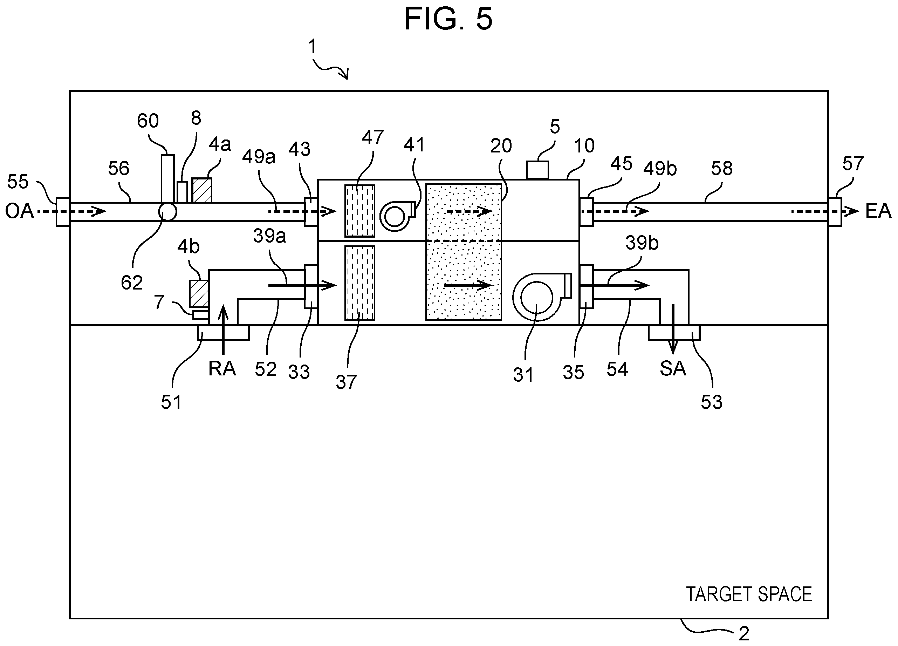

Fig. 5 illustrates the configuration of CO₂ separation system 1. In addition to the configuration in Fig. 1, CO₂ separation system 1 includes additional duct 60 and damper 62. Additional duct 60 is also called additional air duct, and is open to the outside of the target space inside the room in building 2 (for example, attic). Additional duct 60 is connected to outside air introduction duct 56 at upstream of CO₂ separation element 20. Additional duct 60 circulates additional air through outside air introduction duct 56, performing heat exchange between additional air having flowed into outside air introduction duct 56 and outside air. When the temperature of additional air is closer to the temperature of inside air than the temperature of outside air, heat exchange occurs between additional air and inside air so that the temperature of the air obtained by mixing outside air and additional air is closer to the temperature of inside air than the temperature of outside air. At the portion where additional duct 60 is connected to outside air introduction duct 56, damper 62 is provided. Opening and closing of damper 62 is controlled by controller 5. By controlling opening and closing of damper 62, the amount of additional air flowing into outside air introduction duct 56 from additional duct 60 is controlled.

According to the second exemplary embodiment, where additional duct 60 is connected to outside air introduction duct 56 at upstream of CO₂ separation element 20, heat exchange is performed between additional air having flowed into outside air introduction duct 56 and outside air, so that the temperature of the mixed air of outside air and additional air becomes closer to the temperature of inside air. In addition, the temperature of the mixed air of outside air and additional air is closer to the temperature of inside air, so that heat loss due to heat exchange is reduced.

The outline of an aspect of the present disclosure is as follows. Additional air duct (60) that circulates air outside the target space inside the room as additional air may be further included. Additional air duct (60) may be connected to outside air duct (56) at upstream of CO₂ separator (20), and additional air duct (60) circulates the additional air to outside air duct (56) to perform heat exchange between the additional air having flowed into outside air duct (56) and the outside air.

The present disclosure has been described above according to the exemplary embodiments. It will be understood by those skilled in the art that the exemplary embodiments are merely examples, that various modifications in combinations of components or processing processes of the exemplary embodiments are possible, and that such modifications fall within the scope of the present disclosure.

The first exemplary embodiment has a configuration that air outside the room (outside the building) is introduced as air 49a. However, the present invention is not limited thereto. For example, as air 49a, air may be introduced from the ceiling portion of a building, or air inside a room such as a vacant room adjacent thereto may be introduced. Also in such configurations, air having a carbon dioxide concentration smaller than that of air 39a in the target space where a person is present and the carbon dioxide concentration has increased can be introduced into CO₂ separation element 20 as air 49a. Therefore, it is possible to obtain a similar effect that CO₂ transfers from air 39a having a high CO₂ concentration to air 49a having a relatively low CO₂ concentration and an increase in the CO₂ concentration in the target space can be suppressed.

### REFERENCE MARKS IN THE DRAWINGS

- 1: CO₂ separation system
- 2: building
- 4: temperature adjuster
- 5: controller
- 6: stacked structure
- 7: outside air temperature detector
- 8: inside air temperature detector
- 10: housing
- 14: frame
- 16: inside air duct
- 17: outside air duct
- 18: CO₂
- 19: N₂
- 20: CO₂ separation element
- 21: CO₂ separation element piece
- 22: CO₂ separation membrane
- 31: inside air fan
- 33: inside air port
- 35: air supply port
- 37: inside air filter
- 39: air
- 41: outside air fan
- 43: outside air port
- 45: exhaust port
- 47: outside air filter
- 49: air
- 51: indoor suction port
- 52: inside air introduction duct
- 53: indoor blow port
- 54: inside air blow duct
- 55: outdoor suction port
- 56: outside air introduction duct
- 57: outdoor blow port
- 58: outside air blow duct

## Claims

1. A CO₂ separation system comprising:
an inside air duct that introduces and circulates air in a target space inside a room as inside air and returns the inside air to the target space;
an outside air duct that introduces and circulates air outside the room as outside air and releases the outside air to an outside of the room;
a CO₂ separator that separates CO₂ from the inside air circulating through the inside air duct and introduces the CO₂ into the outside air circulating through the outside air duct;
a temperature adjuster that adjusts at least one of a temperature of the inside air to be introduced into the CO₂ separator and a temperature of the outside air to be introduced into the CO₂ separator; and
a controller that controls the temperature adjuster,
wherein the controller controls the temperature adjuster so that a temperature difference between the temperature of the inside air to be introduced into the CO₂ separator and the temperature of the outside air to be introduced into the CO₂ separator becomes smaller than a temperature difference between a temperature of the air in the target space and a temperature of the air outside the room.

2. The CO₂ separation system according to claim 1, wherein the controller causes the temperature adjuster to perform temperature adjustment to the outside air so that the temperature of the outside air gets closer to the temperature of the inside air.

3. The CO₂ separation system according to claim 1, wherein,
when the temperature adjuster is operating,
the controller controls the temperature adjuster so that temperature adjustment energy required to operate the temperature adjuster becomes smaller than heat exchange energy caused by heat exchange between the inside air and the outside air in the CO₂ separator.

4. The CO₂ separation system according to claim 1, further comprising:
an inside air temperature detector that detects the temperature of the inside air in the inside air duct; and
an outside air temperature detector that detects the temperature of the outside air in the outside air duct,
wherein the controller controls the temperature adjuster based on the temperature of the inside air detected by the inside air temperature detector and the temperature of the outside air detected by the outside air temperature detector.

5. The CO₂ separation system according to claim 1, further comprising an additional air duct that circulates air outside the target space inside the room as additional air,
wherein the additional air duct is connected to the outside air duct at upstream of the CO₂ separator, and
the additional air duct circulates the additional air to the outside air duct to perform heat exchange between the additional air having flowed into the outside air duct and the outside air.
